(19) Europäisches Patentamt
European Patent Office
Office européen des brevets

(11) **EP 4 764 414 A1**

(12) **EUROPEAN PATENT APPLICATION**

(43) Date of publication:
24.06.2026 Bulletin 2026/26

(21) Application number: 25225136.8

(22) Date of filing: 18.12.2025

(51) International Patent Classification (IPC):
*G01C 21/20* (2006.01)

(52) Cooperative Patent Classification (CPC):
**G01C 21/206**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.12.2024 US 202418999363**

(71) Applicant: **Qwake Technologies, Inc.**
**San Francisco CA 94109 (US)**

(72) Inventor: **LONG II, John Davis**
**New York, 10128 (US)**

(74) Representative: **Clarke, Modet y Cía., S.L.**
**C/ Suero de Quiñones 34-36**
**28002 Madrid (ES)**

(54) **WEARABLE PERSONAL INSIDE-OUT LOCATION TRACKING**

(57) A system for a wearable personal inside-out location tracking may include a hands-free wearable display configured to display augmented reality optics among other navigation-related visualizations, a camera and an inertial sensor, and a personal computing system. The personal computing system may be configured to store information and perform computations relating to a method for personal location tracking. Such a method may include initializing a personal navigation history comprising a first-in-first-out (FIFO) queue, inserting into the FIFO queue a waypoint in an order generated by a personal tracking system, generating a cone of visibility by pruning the user's personal navigation history according to a parametric model representing both an egocentric visibility constraint and an environment constraint, and determining a backtracking route based on the cone of visibility. Visualization data may be generated based on the backtracking route, resulting visualizations meant to guide a user back to an origin location.

FIGURE 2A

EP 4 764 414 A1

**Description**

**BACKGROUND OF INVENTION**

In high stress and sometimes hazardous environments-firefighting, accident scene, search and rescue, disaster relief, mining, police or military operation, special operations, and crowded or hectic public consumer areas, and the like-emergency response personnel and other users often need to navigate in low-visibility environments with unknown hazards and unpredictable or unfamiliar physical obstacles, such as buildings with damaged or collapsed structures or temporary pop-up consumer environments (e.g., large outdoor fairs and markets, warehouse buildings with many different vendors or unfamiliar dividing structures). In many environments (e.g., hazardous, disaster, distracting environments) it may be very difficult to navigate into and out of such environments using conventional navigation tools.

Many conventional existing location tracking solutions require outside-in location tracking infrastructure, relying on external location services, such as GPS. Other known camera-based inside-out team location tracking systems assume high-quality visible light images (i.e., for extracting sparse features, which are used for matching across time in order to estimate camera motion and scene structure). However, many environments (e.g., hazardous or disaster environments in which emergency responders and critical workers often need to operate, warehouse stores, large fairs or markets) typically have poor access to external location services and/or cannot accommodate the capture of high-quality visible light images in real time, these conventional solutions are of limited use to them.

Thus, there is a need for wearable personal inside-out location tracking.

**BRIEF SUMMARY**

The present disclosure provides techniques for a wearable personal inside-out location tracking system. A system for a wearable personal inside-out location tracking system include: an augmented reality optic system comprising a hands-free wearable display positioned to be within a field of view of a user; a plurality of sensors comprising at least a camera and an inertial sensor; an input component comprising one or both of a button and a microphone; and a personal computing system configured to implement an inside-out personal location tracking feature to generate a backtracking route based on a cone of visibility determined by application of a parametric model to a personal navigation history generated by the inside-out personal location tracking feature, wherein the hands-free wearable display is configured to present a visualization associated with the backtracking route. In some examples, the personal computing system is further configured to initialize the user's personal navigation history. In some examples, the personal navigation history comprises a first-in-first-out (FIFO) queue. In some examples, the personal computing system is further configured to insert into the FIFO queue a pair comprising 3D coordinates and an axis-angle vector for each waypoint generated by the tracking system, thereby building a sequence of waypoints into the FIFO queue. In some examples, the user's personal navigation history comprises a sequence of waypoints, wherein each waypoint is at least a minimum allowable time apart and a minimum distance apart. In some examples, the parametric model comprises a set of egocentric visibility constraints, the set of egocentric visibility constraints comprising an angular threshold, a minimum distance parameter, and a maximum distance parameter, the minimum distance parameter comprising a threshold minimum distance from a current camera center and the maximum distance parameter comprising a threshold maximum distance from the current camera center. In some examples, the parametric model further comprises a set of environment constraints. In some examples, the personal computing system is further configured to prune the personal navigation history to generate the cone of visibility. In some examples, the backtracking route is configured to guide the user to a waypoint within the cone of visibility. In some examples, the personal computing system is further configured to track the user's proximity to an initial waypoint. In some examples, the personal computing system is further configured to track the user's orientation relative to an initial reference orientation.

A method for personal inside-out location tracking may include: initializing a personal navigation history comprising a first-in-first-out (FIFO) queue; inserting into the FIFO queue a plurality of waypoints in an order in which they are generated by a personal tracking system, thereby building a sequence of waypoints into the FIFO queue, the sequence of waypoints representing the user's personal navigation history, wherein each waypoint in the FIFO queue is at least a minimum allowable time apart and a minimum distance apart; generating a cone of visibility by pruning the user's personal navigation history according to a parametric model representing both an egocentric visibility constraint and an environment constraint; and determining a backtracking route based on the cone of visibility. In some examples, the method also includes generating visualization data configured to cause a visualization associated with the backtracking route to be presented on a display. In some examples, the environment constraint comprises a map point. In some examples, the map point represents an occlusion. In some examples, the egocentric visibility constraint comprises an angular threshold, a minimum distance parameter, and a maximum distance parameter, the minimum distance parameter comprising a threshold minimum distance from a current camera center and the maximum distance parameter comprising a threshold maximum distance from the current camera center. In some examples, each waypoint comprises a set of 3D coordinates and an axis-angle vector. In some examples, the visualization comprises a compass. In some examples, the visualization comprises an icon. In some examples, the visualization comprises a banner.

## BRIEF DESCRIPTION OF THE DRAWINGS

Various non-limiting and non-exhaustive aspects and features of the present disclosure are described herein below with references to the drawings wherein:

FIGS. 1A-1B are diagrams illustrating exemplary use cases for a wearable personal inside-out location tracking system, in accordance with one or more embodiments.

FIG. 2A is a diagram illustrating an exemplary cone of visibility determined by a wearable personal inside-out location tracking system, in accordance with one or more embodiments.

FIG. 2B comprises a 2D graph of features of the cone of visibility in FIG. 2A, in accordance with one or more embodiments.

FIG. 3 is a more detailed 2D graph illustrating an exemplary cone of visibility, in accordance with one or more embodiments.

FIGS. 4A-4B are diagrams illustrating exemplary wearable vision modules comprising input buttons and a hands-free wearable display, in accordance with one or more embodiments.

FIG. 5 is a simplified diagram of an exemplary display associated with a backtracking route generated using a personal navigation history, in accordance with one or more embodiments.

FIGS. 6A-6D are diagrams illustrating exemplary augmented reality optics, in accordance with one or more embodiments.

FIGS. 7A-7B are process flow diagrams illustrating exemplary methods for personal inside-out location tracking, in accordance with one or more embodiments.

FIG. 8A is a simplified block diagram of an exemplary computing system configured to perform steps of the methods illustrated herein and implement the systems shown herein, in accordance with one or more embodiments.

FIG. 8B is a simplified block diagram of an exemplary distributed computing system implemented by a plurality of the computing devices in FIG. 19A, in accordance with one or more embodiments.

Like reference numbers and designations in the various drawings indicate like elements. Skilled artisans will appreciate that elements in the Figures are illustrated for simplicity and clarity, and have not necessarily been drawn to scale, for example, with the dimensions of some of the elements in the figures exaggerated relative to other elements to help to improve understanding of various embodiments. Common, well-understood elements that are useful or necessary in a commercially feasible embodiment are often not depicted in order to facilitate a less obstructed view of these various embodiments.

## DETAILED DESCRIPTION

The Figures and the following description describe certain embodiments by way of illustration only. One of ordinary skill in the art will readily recognize from the following description that alternative embodiments of the structures and methods illustrated herein may be employed without departing from the principles described herein. Reference will now be made in detail to several embodiments, examples of which are illustrated in the accompanying figures.

The invention comprises a wearable inside-out location tracking system operative in low-visibility environments (e.g., dark, smoke-filled, or otherwise visibility impaired environments) wherein external location services are ineffective (e.g., not sufficiently accurate) or unavailable. The wearable inside-out location tracking system may comprise augmented reality optics, a camera, inertial sensors, and a personal computing system. Augmented reality optics may comprise a hands-free wearable display (e.g., HUD) configured to provide visualizations of information associated with a user's navigation history and path recommendations, including an egocentric perspective of the user and guidance between waypoints (e.g., "crumbs" back to an entry point or to another viable exit along a user's historical traveled path). The wearable system may further comprise buttons (e.g., physical, haptic), microphones, or other means, for providing inputs to the hands-free wearable display, for example to initiate a personal inside-out location tracking feature, to respond to alerts and other notifications, to switch or toggle between modes or views, to initiate an emergency signal (e.g., man-down alert, wireless beacon, etc.) and the like.

The personal computing system may be configured to implement a personal inside-out location tracking feature configured to track a user's path in a given environment (e.g., a building, a disaster area, other dangerous environments with low visibility and/or many obstacles) and lead the user back to safety (e.g., by route backtracking). The personal computing system may be configured to efficiently store and retrieve a complete history of a user's personal navigation history from when the personal inside-out location tracking feature is initiated (e.g., locally by the user, remotely by instruction from a command device, or automatically upon sensing certain conditions). The personal computing system may comprise logic for pruning the user's personal navigation history to enable safe and efficient route backtracking. Refined mapping and tracking data from an inside-out location tracking and mapping system (e.g., stored in an associative data structure, such as a tracking grid) may be leveraged to assist a user in finding a path back to a given entry point, or to another viable exit along the user's personal navigation history, in an unknown low-visibility environment.

An initialization of the personal inside-out location tracking feature may clear any previous navigation history, populate the user's navigation history with a set of 3D zero coordinates {0;0;0}, and assign an initial reference orientation. The 3D zero coordinates and the initial reference orientation may comprise an initial (i.e., origin) waypoint. In some examples, the wearable system may be configured to sense a geomagnetic North, in which case the initial orientation may be set relative to the geomagnetic North. In other examples, an initial orientation may be set to an egocentric North comprising the user's heading at the time of initialization. After initialization, subsequent waypoints (i.e., "crumbs") may be inserted into a First-In-First-Out (FIFO) queue as pairs of 3D coordinates and axis-angle vectors. This FIFO may facilitate a "look-back" operation over the personal navigation history. In some examples, logic for inserting a crumb into the user's personal navigation history FIFO queue comprises the following criteria:

- a parameter $dt_{min}$ is defined to represent a minimum allowable time between crumb insertions, such that a rate of insertion of crumbs matches a timescale of human behavior;
- a parameter $dist_{min}$ is defined to represent a minimum distance between crumbs matched to a length scale of human behavior.

The look-back operation may be configured to safely prune the FIFO navigation history queue by examining a set of crumbs in the queue associated with a predetermined look-back window size. Starting from the most recent crumb and working backwards in time, each crumb in the FIFO navigation history queue is inspected for inclusion into a cone of visibility relative to a current camera state. The cone of visibility comprises a model of the user's gaze direction. The cone of visibility may be defined by parameters $dist_{min}^{cv}$ and $dist_{max}^{cv}$, corresponding to a minimum and maximum distance, respectively, that a crumb can be from a current camera center to be considered within the cone of visibility. Together they define an acceptable distance margin. Another parameter, $\theta_v$, may comprise an angular threshold for determining whether a crumb within the look-back window falls within the cone of visibility. Crumbs that take an angle below the angular threshold relative to the user's current camera z-axis $z^w$, in the world frame, may be included. The angle between each interrogated crumb, $c^i$, and the positive z-axis of the camera in the world frame, $z^w$, may be estimated as:

$$\theta_v^i = \mathrm{acos}\,(< z^w, \frac{c^i}{\|c^i\|} >)$$

where:

- <.,.> comprises the inner or "dot" product between 3D vectors
- $z^w$ comprises the world frame camera z-axis
- $c^i$ and $\|c^i\|$ comprises the $i^{th}$ crumb and its norm, respectively.

In addition to an egocentric visibility constraint (e.g., the cone of visibility), the personal location tracking feature may further consider environment constraints in the form of map points from a sparse mapping backend or dense voxel surface model. For example, a definition of an environment constraint may comprise a map point location, a unit vector at the map point representing an average (or other statistic) of the viewing angles over previous observations of the environment constraint, and a constraint function for evaluating whether a crumb is occluded by the environment constraint. In some examples, a map point may be included if its location falls within the cone of visibility-the angle of its unit vector does not exceed an angular threshold, i.e., $\theta_v^i < \theta_v$, relative to the user's current camera z-axis and its unit vector aligns with a current camera axis $\pm \theta_m$. In other examples, an environment constraint may be provided by a different means (e.g., different kind of map). An environment constraint comprises an occlusion within the cone of visibility if it is both visible and oriented towards the user. In other words, the cone of visibility constrains the set of crumbs for a backtracking route to only those that fall within a parametric model that captures both egocentric viewing and environment constraints. For a crumb to be included in the cone of visibility, it must (a) have an $\theta_v^i < \theta_v$, (b) have a distance from a current camera that is within the acceptance margin $dist_{min}^{cv} < \|cam^w - c^i\| < dist_{max}^{cv}$, and (b) not be occluded by any environment constraints within the cone of visibility.

The personal location tracking feature also may define when a user has departed from an initial waypoint and when they have returned to an initial waypoint. In some examples, the user has departed when they are a distance of $\alpha * dist_{min}$ away from the initial waypoint and has returned when they are a distance of $\beta * dist_{min}$ away from the initial waypoint.

The personal location tracking feature may output a variety of visualizations to a user's hands-free wearable display to provide the user with useful information for navigating within the given environment. A visualization may comprise an indication of a bearing towards a next recommended crumb, a proximity indicator to the next recommended crumb, a tracking status (e.g., initiated, departed, returned, tracking failure, backtracking route re-acquisition, etc.), a compass, an indication of an exit or entrance, other alert or notification, and any combination thereof. The visualization may be presented in an egocentric perspective of the user to enable efficient and intuitive navigation. In some examples, the visualization may also comprise a partial trajectory of the user's remaining navigation history (e.g., a backtracking trajectory), up to occlusion by environment constraints. In some examples, the visualization may present a user's backtracking trajectory in terms of crumb locations. Alternatively, or in addition, the visualization may present interpolations in between crumb locations. In an example, a HUD may render a user's backtracking trajectory from the user's egocentric perspective - the visualization displaying the user's orientation relative to a next crumb along their route. In some examples, the visualization may also provide visual cues indicating the user's backtracking trajectory. The visualization may reflect a combination of crumb and environment constraints processed within a cone of visibility. A hands-free wearable display may provide visualizations in 2D or 3D (e.g., map graphics, compass graphics, augmented reality graphics).

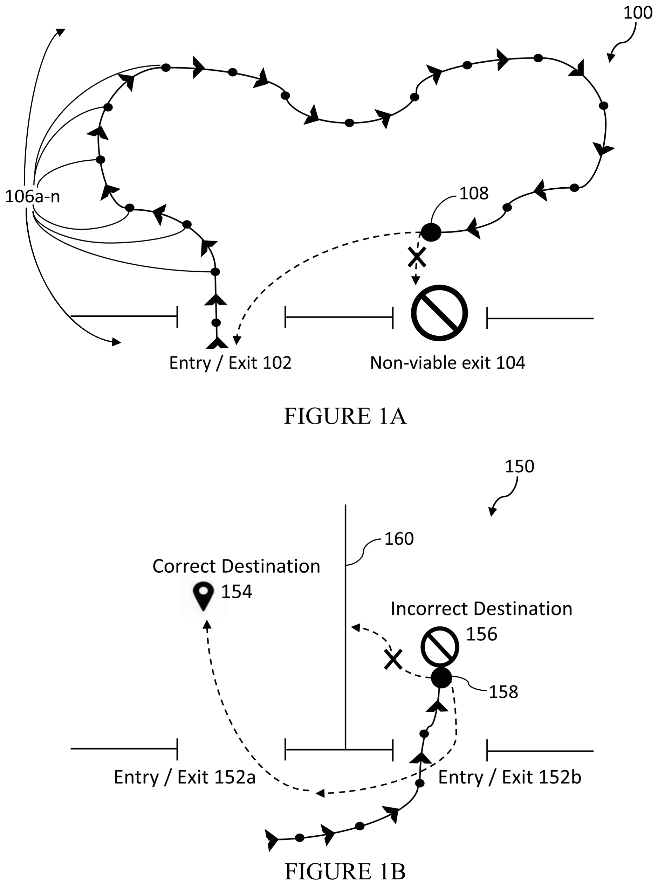

FIGS. 1A-1B are diagrams illustrating exemplary use cases for a wearable personal inside-out location tracking system, in accordance with one or more embodiments. In diagram 100, an environment is represented, the environment comprising entry/exit 102, a non-viable exit 104, a plurality of waypoints 106a-106n, and a current location 108. In an example use case, a first responder or emergency response personnel may be operating in an unfamiliar, GPS-denied environment (e.g., indoor structures) with low visibility (e.g., due to fire, smoke, flooding, collapsed structures, etc.). It may be difficult for a user to determine a return path to entry/exit 102 or to distinguish between non-viable exit 104 (e.g., an obstructed exit, a window, other opening that is not safe for exit) and entry/exit 102. In diagram 150, another environment is represented, this other environment comprising entry/exits 152a-152b, a correct destination 154, an incorrect destination 156, a current location 158, and an obstacle 160 (e.g., a temporary or permanent wall, a row of vendors, a fence, or other barrier). In an example use case, a user may be navigating in an unfamiliar retail setting (e.g., large scale, temporary, crowded) with multiple entry/exit points 152a-152b and many similar-looking destinations (e.g., shops, kiosks, tents, etc.). A user may desire high-resolution (e.g., high speed, high detail) personal navigation to correct destination 154, especially after entering an area with incorrect destination 156, it may be difficult to find a way back out through entry/exit 152b and into entry/exit 152a to correct destination 154. In both of these examples, a personal inside-out location tracking system, as described herein, would be useful in navigating back out of a viable entry/exit point.

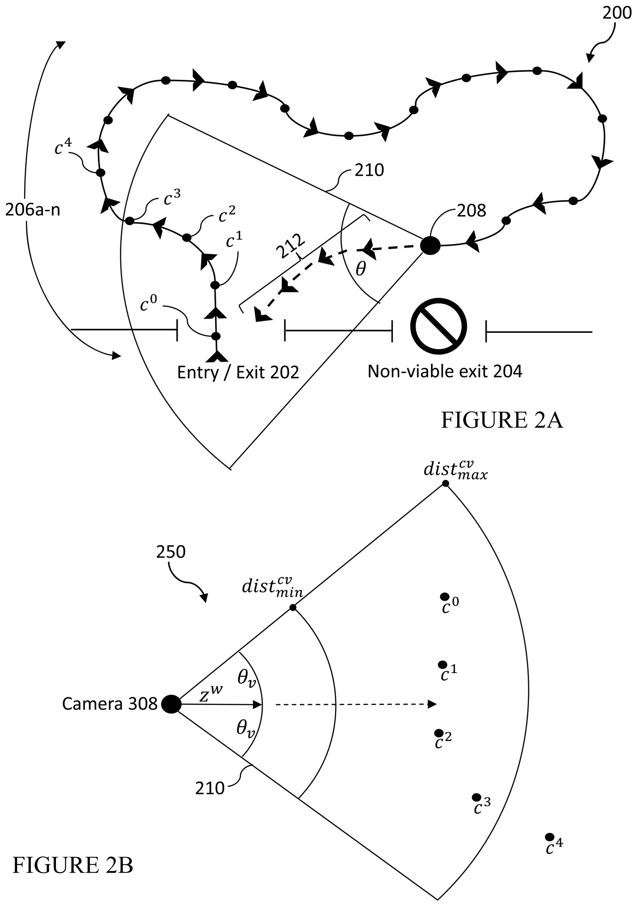

FIG. 2A is a diagram illustrating an exemplary cone of visibility determined by a wearable personal inside-out location tracking system, in accordance with one or more embodiments. In diagram 200, an environment is represented, the environment comprising entry/exit 202, a non-viable exit 204, a plurality of waypoints 206a-206n, and a current location 208. The plurality of waypoints 206a-206n may comprise a series of stored waypoints representing a user's personal navigation history in this environment. A personal inside-out location tracking system may be configured to retrieve and prune the user's personal navigation history to generate cone of visibility 210 comprising a subset of waypoints $c^0$ to $c^3$, wherein waypoints $c^4$ and beyond lie outside of the cone of visibility 210. Pruning the user's personal navigation history may comprise inspecting each waypoint for inclusion into the cone of visibility (e.g., according to a model as described herein) starting from the most recent crumb and working backwards in time (e.g., a look-back operation as described herein). The personal inside-out location tracking system may be configured to recommend an efficient backtracking route 212 for the user at current location 208, first towards $c^2$ or $c^1$, and possibly later towards $c^0$, as a way back out of entry/exit 202.

In some examples, a personal inside-out location tracking system may be initialized / activated (e.g., turned on manually or automatically) when a user enters the environment through entry/exit 202.

In some examples, manual activation may be achieved by a button press or a voice command. In other examples, there may be automatic activation when certain conditions are met (e.g., sensors detect low-visibility or otherwise hazardous conditions), or activation may be implemented using a remote device (e.g., a remote command device being used by a remote user). In some examples, initialization may comprise clearing the system storage / memory of any previous navigation history and populating it with 3D zero coordinates - {0;0;0}. In some examples, initialization also may comprise assigning an initial reference orientation. The initial reference orientation may be set in reference to a geomagnetic North, or the initial reference orientation may simply be an egocentric "North" setting using a user's heading at the time of initialization. In either case, subsequent waypoints may be inserted into a FIFO queue with reference to the initial reference orientation. The FIFO queue may comprise pairs of (a) 3D coordinates and (b) axis-angle vectors. Waypoints 206a-206n may be added to the FIFO queue at time intervals according to parameter $dt_{min}$ and distance intervals according to $dist_{min}$.

The FIFO queue facilitates a convenient "look-back" operation over a user's personal navigation history from a present (i.e., current) location to past locations when a backtracking route is desired, the look-back operation iterating backwards from an output end of the queue (e.g., waypoint 206n being the most recent waypoint going back from current location 208). The look-back operation may be performed in response to an initiation of a backtracking feature, wherein each of waypoints 206a-206n may be inspected to determine whether that waypoint should be included in a cone of visibility. The cone of visibility comprises a model of a user's gaze, and therefore is defined relative to a current camera state, wherein the camera view is in the same or similar direction as the user's gaze. FIG. 2B comprises a 2D graph of features of the cone of visibility in FIG. 2A, in accordance with one or more embodiments. The cone of visibility is defined by the parameters minimum distance from a current camera center $dist_{min}^{cv}$, maximum distance from a current camera center $dist_{max}^{cv}$, and angular threshold $\theta_v$. As described above, angular threshold $\theta_v$ is relative to a positive z-axis of the camera $z^w$ in the world frame. As shown, the subset of waypoints subset of waypoints $c^0$ to $c^3$ are within the cone of visibility 210 as defined by $dist_{min}^{cv}$, $dist_{max}^{cv}$, and $\theta_v$ relative to $z^w$, whereas $c^4$ is outside the cone of visibility 210.

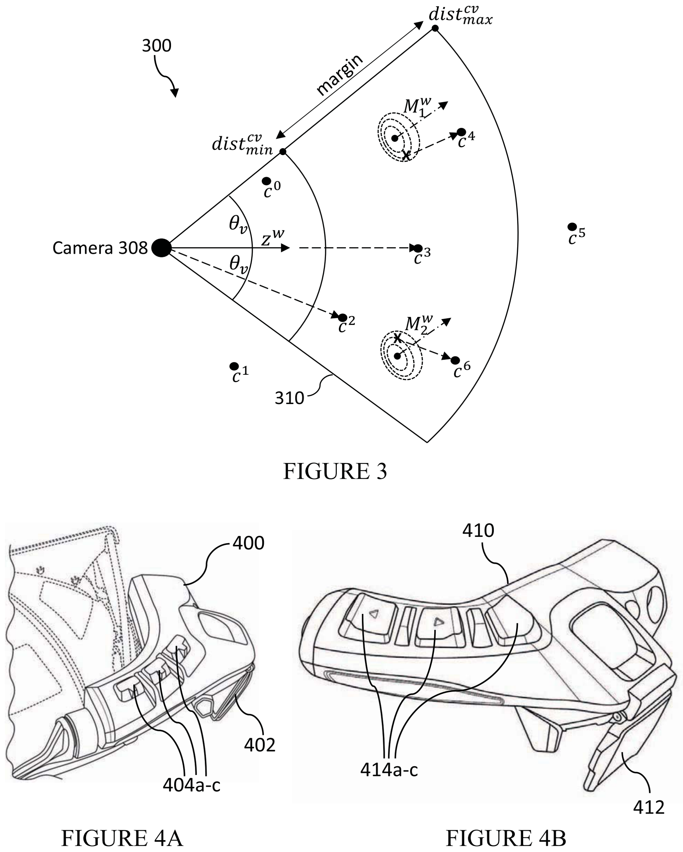

FIG. 3 is a more detailed 2D graph illustrating an exemplary cone of visibility, in accordance with one or more embodiments. In graph 300, waypoints $c^i$, $i$ = {0, 1, 2, 3, 4, 5, 6}, may be evaluated by a personal location tracking system in reverse chronological order for inclusion in cone of visibility 310 relative to $z^w$, which is based on an orientation / gaze of camera 308. Waypoints $c^2$, $c^3$, $c^4$, and $c^6$ all meet the angular constraint $\theta_v$ and fall within the acceptable distance margin between $dist_{min}^{cv}$ and $dist_{max}^{cv}$. Waypoint $c^1$ does not meet the angular constraint and waypoints $c^0$ and $c^5$ fall outside of the acceptable distance margin. Waypoints $c^4$ and $c^6$, however, are occluded by environment constraints $M_1^w$ and $M_2^w$, respectively. In some examples, $M_1^w$ and $M_2^w$ may represent physical obstacles in a user's world view (e.g., walls and other barriers). As described herein, environment constraints may comprise map points from a sparse mapping backend or dense voxel surface model, or may be provided by other means (e.g., different maps, previous observations using camera 308). In some examples, the orientations of $M_1^w$ and $M_2^w$ (e.g., as shown by the dashed-dotted vector arrows) may have been recorded and stored previously from one of these sources and may be retrieved as the personal location tracking system performs the look-back operation to generate the cone of visibility. The dashed line arrows indicate orientations of $c^2$, $c^3$, $c^4$, and $c^6$ relative to camera 308. In some examples, $c^2$ may be selected as the waypoint within the cone of visibility toward which the personal location tracking system will first recommend a path to as its closer proximity to camera 308 may represent a safer trajectory. In other examples, a next path recommendation after the user nears or reaches $c^2$ may be towards $c^3$. In still other examples, the personal location tracking system may re-evaluate the cone of visibility at a next current location at or near $c^2$.

In some examples $c^0$ and $c^1$ may be pruned from the user's personal navigation history queue for purposes of generating a backtracking route. If there were more waypoints prior to $c^2$, those also would be pruned up to $c^2$. Furthermore, while waypoints $c^4$ through $c^6$ were censored at this iteration, they are not pruned because they may be valid upon subsequent iterations as a user moves towards them. In some examples, the personal location tracking system may implement a departed and returned feature (e.g., with respect to a home / entry / initial waypoint / location), as described above.

The resulting backtracking route, or portions thereof, may be presented in visualizations on a hands-free wearable display. FIGS. 4A-4B are diagrams illustrating exemplary wearable vision modules comprising input buttons and a hands-free wearable display, in accordance with one or more embodiments. Wearable vision modules 400 and 410 may each comprise buttons 404a-404c and 414a-414c, respectively. Wearable vision modules 400 and 410 also may each comprise a hands-free wearable display (e.g., HUD) 402 and 412, respectively. In some examples, wearable vision modules 400 and 410 further may comprise personal computing systems, as described herein. In some examples, one or more of buttons 404a-404c may be configured to control aspects of visualizations provided to HUD 402, and one or more of buttons 414a-414c may be configured to control aspects of visualizations provided to HUD 412. In some examples, one or more of buttons 404a-404c and 414a-414c may be configured to control other aspects of a personal location tracking system, such as initialization, modes, map type, re-routing, notification scrolling, notification acknowledgement, toggling between screens or views, and the like. In other examples, one or more of buttons 404a-404c and 414a-414c may be configured to control other functions of a wearable vision module. In some examples, wearable vision modules 400 and 410 also may comprise one or more sensors, including a camera (e.g., a thermal imaging camera (TIC), a radiometric thermal camera, other visual sensor) and an inertial sensor (e.g., inertial monitoring unit (IMU)), the data from which may be used in a personal location tracking system as described herein. In some examples, HUD 402 and HUD 412 may be positioned within a field of view of a user when vision modules 400 and 410 are worn (e.g., mounted to a helmet or other head gear being worn by a user).

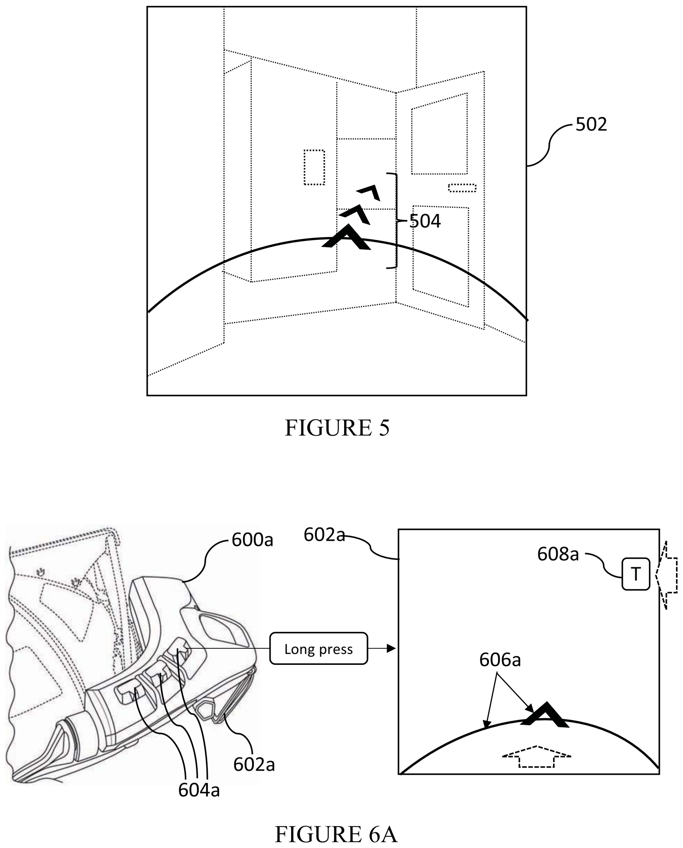

HUD 402 and HUD 412 may be configured to display a variety of visualizations, including visualizations relating to a backtracking route generated by a personal location tracking system, as described herein. FIG. 5 is a simplified diagram of an exemplary display associated with a backtracking route generated using a personal navigation history, in accordance with one or more embodiments. An exemplary display 502 (e.g., a hands-free wearable display) may show to a user a visualization of an environment (e.g., dotted line picture showing a door leading to a hallway or a room) superimposed with a compass 504 (e.g., indicating a horizon arc line and chevrons pointing toward a direction of the backtracking route. In some examples, the environment shown in display 502 may comprise an augmented reality representation of an actual environment in which the user is navigating.

FIGS. 6A-E are diagrams illustrating exemplary augmented reality optics, in accordance with one or more embodiments. In some examples, an example augmented reality optics system may comprise a wearable vision module (e.g., vision modules 600a-600c) comprising a hands-free wearable display (e.g., displays 602a-602d) and one or more buttons (e.g., buttons 604a-604c). As shown in FIG. 6A, a long press of one of buttons 604a may cause a personal location tracking system to initialize, as described herein, which may result in a compass 606a and tracking icon 608a to appear onto display 602a. In other examples, a personal location tracking system may be caused to initialize differently (e.g., by voice command, automatically, remotely). In some examples, compass 606a and tracking icon 608a may simply appear or they may animate into view (e.g., sliding in from various sides of the screen as shown by the dotted arrows, fading in, flashing, or other animated appearance) in response to an initialization of the personal location tracking system.

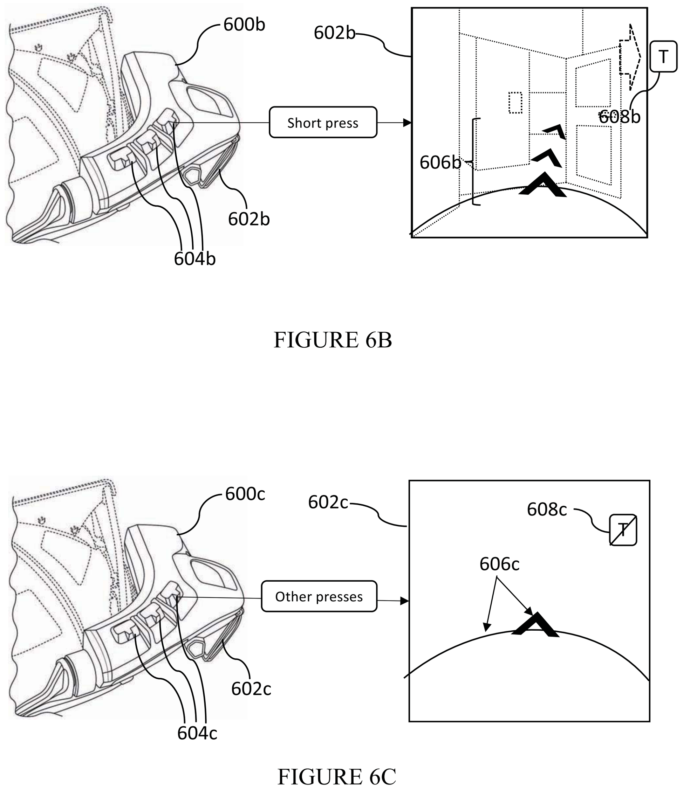

As shown in FIG. 6B, a short press of one of buttons 604b on wearable vision module 600b may cause a backtracking feature to be initiated, for example, when a user is ready to return to a point of entry (e.g., point of origin, entry / exit location). In some examples, when the backtracking feature is initiated, tracking icon 608b may disappear from display 602b, an augmented reality representation of the user's environment may appear, and compass 606b may change (e.g., color, format, shape) to better show directions relating to a backtracking route generated by a personal location tracking system, as described herein.

As shown in FIG. 6C, other presses (e.g., sequences or combinations of short or long, a sustained longer press, pressing more than one button at a time, etc.) of one or more of buttons 604c on vision module 600c may result in other actions and changes to the visualization shown on display 602c toggling between various modes. For example, such presses may toggle between the compass 606b and augmented reality environment on display 602b and another type of compass 606c (e.g., showing an orientation and/or distance relative to an initial orientation) or another type of display altogether (e.g., a map, an alert, etc.) that is not shown. In an example, if personal location tracking (e.g., building of the user's personal navigation history with addition of waypoints into the FIFO queue) fails, an inactive tracking icon 608c may be shown (e.g., a tracking icon with a slash through it) and a basic compass (e.g., showing a current orientation relative to an initial orientation or a "North" direction). In some examples, a user may use a button press to re-set navigation and/or location tracking.

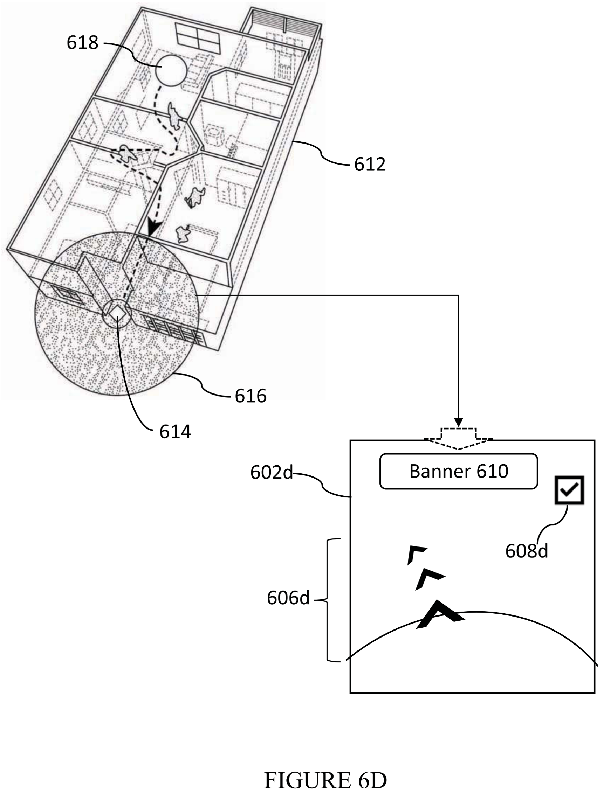

FIG. 6D illustrates a return indicator feature wherein backtracking compass 606d is displayed on display 602d, along with banner 610 and checkmark icon 608d configured to indicate a proximity to and/or arrival at an initial waypoint 614. In some examples, if a user has successfully navigated from a location 618 in environment 612 to within a threshold distance $\beta * dist_{min}$ from an initial waypoint 614 (e.g., a home point, point of origin, etc.), a banner 610 may be shown on display 602d to indicate to the user their proximity to initial waypoint 614. In some examples, tracking may no longer be necessary at this point, and a checkmark icon 608d may replace the tracking icons 608a-c as a further indication of proximity to, or arrival at, initial waypoint 614. In some examples, a user may turn off the personal location tracking system and/or the backtracking feature using a button press.

In other examples, once the initial waypoint 614 is reached, the personal location tracking system may automatically stop tracking and the backtracking feature may automatically shut off.

In still other examples, various types of button presses may cause other actions to be performed by the personal location tracking system, such as re-setting tracking, re-setting navigation, performing system checks, and the like. While exemplary visualizations have been shown and described herein, one of ordinary skill in the art would understand that many other variations on the visualizations described herein are possible for indicating the actions, features, statuses, and notifications described herein, as well as for indicating other actions, features, statuses, and notifications.

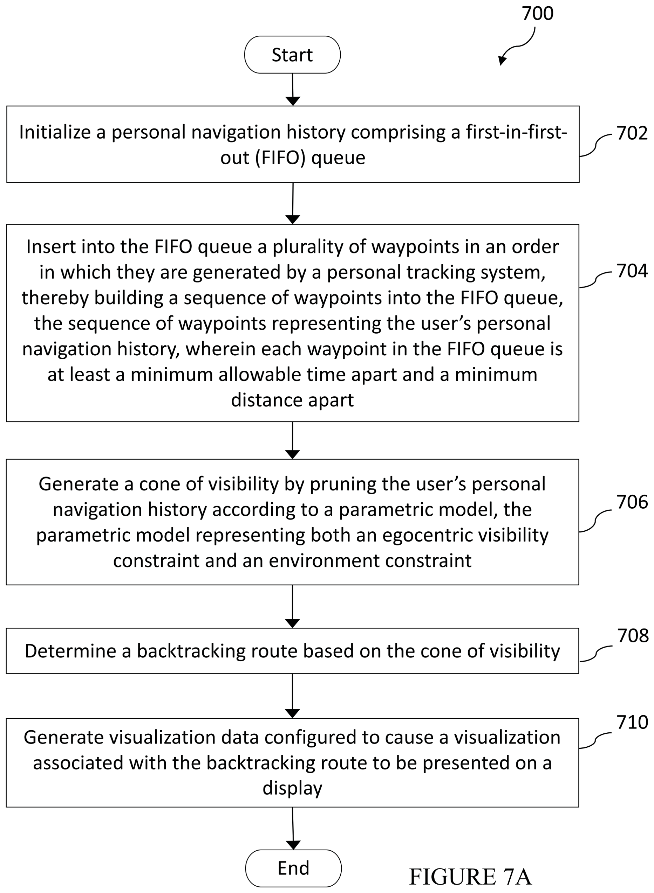

FIGS. 7A-7B are process flow diagrams illustrating exemplary methods for personal inside-out location tracking, in accordance with one or more embodiments. Method 700 may begin with initializing a personal navigation history comprising a first-in-first-out (FIFO) queue at step 702. In some examples, initializing the personal navigation history may comprise clearing any previous navigation history, populating the user's navigation history with a set of 3D zero coordinates {0;0;0}, and assigning an initial reference orientation. The 3D zero coordinates and the initial reference orientation may comprise an initial (i.e., origin) waypoint, subsequent waypoints being added relative to this initial waypoint. A waypoint may be inserted into the FIFO queue in an order in which it is generated by a personal tracking system at step 704, thereby building a sequence of waypoints into the FIFO queue, the sequence of waypoints representing the user's personal navigation history. In some examples, each waypoint in the FIFO queue is at least a minimum allowable time apart and a minimum distance apart. In some examples, each waypoint is stored as a pair comprising 3D coordinates and an axis-angle vector. A cone of visibility may be generated at step 706 by pruning the user's personal navigation history according to a parametric model, the parametric model representing both an egocentric visibility constraint and an environment constraint. In some examples, the egocentric visibility constraint is defined by an angular threshold relative to the user's camera z-axis and a distance margin between a minimum and maximum distance from the user's camera. In some examples, the environment constraint may comprise an occlusion (e.g., wall, collapsed structure, and other physical obstacle) provided by map points from a sparse mapping backend or dense voxel surface model or observed previously and tracked along with, and relative to, the user's personal navigation history. In some examples, pruning the user's personal navigation history may comprise inspecting the sequence of waypoints in reverse chronological order (e.g., from the most recent crumb and working backwards in time) for inclusion into the cone of visibility according to the parametric model. A backtracking route may be determined based on the cone of visibility at step 708. Visualization data may be generated at step 710, the visualization data configured to cause a visualization associated with the backtracking route to be presented on a display. In some examples, the display may comprise a hands-free wearable display configured to show an augmented reality representation of a user's environment with a compass indicating a backtracking route. In some examples, the display may be further configured to show additional icons and banners associated with a location tracking status, a return indication, and other features, statuses, and information. In some examples, the user's proximity to the initial waypoint may also be tracked, for example, to provide an indication to the user when they are within a threshold distance of the initial waypoint.

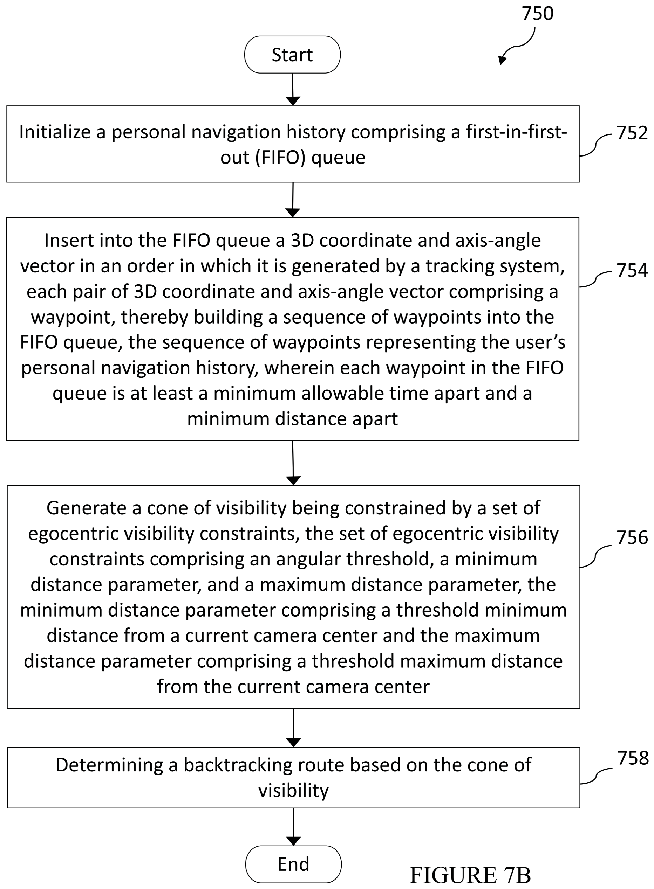

In FIG. 7B, method 750 also may begin with initializing a personal navigation history comprising a first-in-first-out (FIFO) queue at step 752. Method 700 may begin with initializing a personal navigation history comprising a first-in-first-out (FIFO) queue at step 702. In some examples, initializing the personal navigation history may comprise clearing any previous navigation history, populating the user's navigation history with a set of 3D zero coordinates {0;0;0}, and assigning an initial reference orientation. The 3D zero coordinates and the initial reference orientation may comprise an initial (i.e., origin) waypoint. A 3D coordinate and axis-angle vector may be inserted into the FIFO queue in an order in which it is generated by a tracking system at step 754, each pair of 3D coordinate and axis-angle vector comprising a waypoint, thereby building a sequence of waypoints into the FIFO queue, the sequence of waypoints representing the user's personal navigation history. In some examples, each waypoint in the FIFO queue is at least a minimum allowable time apart and a minimum distance apart. A cone of visibility may be generated at step 756, the cone of visibility being constrained by a set of egocentric visibility constraints, the set of egocentric visibility constraints comprising an angular threshold, a minimum distance parameter, and a maximum distance parameter, the minimum distance parameter comprising a threshold minimum distance from a current camera center and the maximum distance parameter comprising a threshold maximum distance from the current camera center. In some examples, the angular threshold also may be determined relative to the current camera center.

In some examples, the cone of visibility may further be constrained by a set of environment constraints, as described herein. In some examples, the cone of visibility may comprise a subset of the sequence of waypoints pruned through inspection of the sequence of waypoints in reverse chronological order (e.g., from the most recent crumb and working backwards in time) for inclusion into the cone of visibility according to the set of egocentric visibility constraints. A backtracking route may be determined based on the cone of visibility at step 758. In some examples, the backtracking route may be used to generate visualizations to be presented on a display, as described herein. In some examples, the user's proximity to the initial waypoint may also be tracked, for example, to provide an indication to the user when they are within a threshold distance of the initial waypoint.

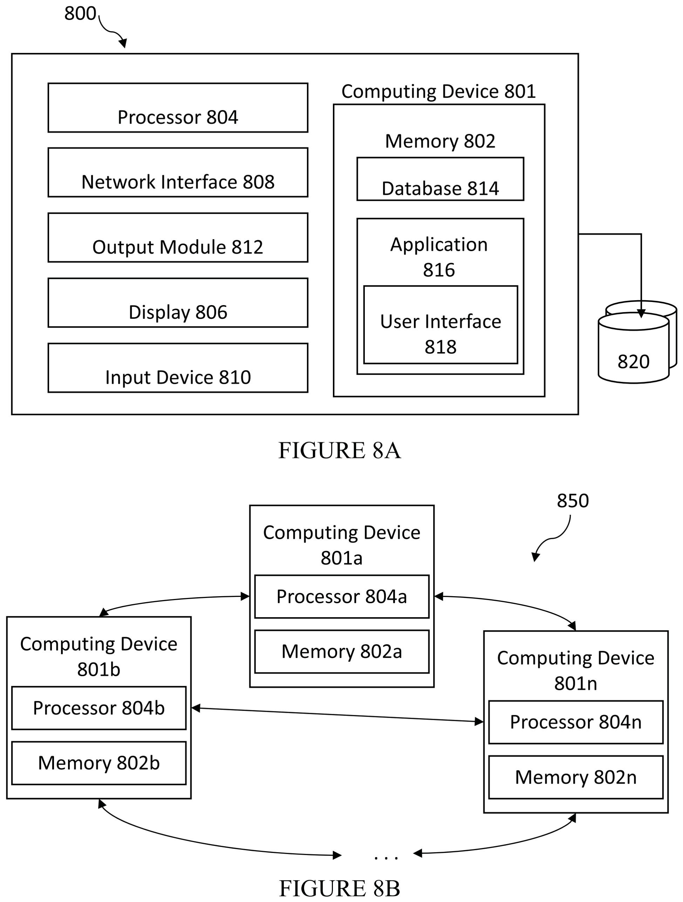

FIG. 8A is a simplified block diagram of an exemplary computing system configured to perform steps of the methods illustrated herein and implement the systems shown herein, in accordance with one or more embodiments. In one embodiment, computing system 800 may include computing device 801 and storage system 820. Storage system 820 may comprise a plurality of repositories and/or other forms of data storage, and it also may be in communication with computing device 801. In another embodiment, storage system 820, which may comprise a plurality of repositories, may be housed in one or more of computing device 801. In some examples, storage system 820 may store sensor data (e.g., camera data, IMU data), telemetry data, other image data, map data, networks, instructions, programs, and other various types of information as described herein (e.g., in a tracking grid or other associative data structure). This information may be retrieved or otherwise accessed by one or more computing devices, such as computing device 801, in order to perform some or all of the features described herein. Storage system 820 may comprise any type of computer storage, such as a hard drive, memory card, ROM, RAM, DVD, CD-ROM, write-capable, and read-only memories. In addition, storage system 820 may include a distributed storage system where data is stored on a plurality of different storage devices, which may be physically located at the same or different geographic locations (e.g., in a distributed computing system such as system 850 in FIG. 8B). Storage system 820 may be networked to computing device 801 directly using wired connections and/or wireless connections. Such network may include various configurations and protocols, including short range communication protocols such as Bluetooth™, Bluetooth™ LE, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces.

Computing device 801, which in some examples may be included in one or more components of a wearable personal location tracking system (e.g., a personal computing system in wearable visual modules 400 and 410 in FIGS. 4A-4B), also may include a memory 802. Memory 802 may comprise a storage system configured to store a database 814 and an application 816. Application 816 may include instructions which, when executed by a processor 804, cause computing device 801 to perform various steps and/or functions (e.g., inside out personal location tracking, cone of visibility generation, backtracking route generation, etc.), as described herein. Application 816 further includes instructions for generating a user interface 818. Database 814 may store various algorithms and/or data, including neural networks, sensor data, telemetry data, and other mapping and tracking data. Memory 802 may include any non-transitory computer-readable storage medium for storing data and/or software that is executable by processor 804, and/or any other medium which may be used to store information that may be accessed by processor 804 to control the operation of computing device 801.

Computing device 801 may further include a display 806, a network interface 808, an input device 810, and/or an output module 812. Display 806 (e.g., displays 502 in FIG. 5 and 602a-602d in FIGS. 6A-6D) may be any display device by means of which computing device 801 may output and/or display data. Network interface 808 may be configured to connect to a network using any of the wired and wireless short range communication protocols described above, as well as a cellular data network, a satellite network, free space optical network and/or the Internet. Input device 810 may comprise buttons, a mouse, keyboard, touch screen, voice interface, microphone and/or any or other hand-held controller or device or interface by means of which a user may interact with computing device 801. Output module 812 may be a bus, port, and/or other interfaces by means of which computing device 801 may connect to and/or output data to other devices and/or peripherals.

In one embodiment, computing device 801 is a data center or other control facility (e.g., configured to run a distributed computing system as described herein), and may communicate with a wireless beacon locator, navigation and communications system, command and control device, and other systems and devices described herein. As described herein, system 800, and particularly computing device 801, may be used for tracking (e.g., storing, retrieving, pruning) waypoints, applying models, determining routes, generating visualization data, and otherwise implementing a personal location tracking system with a backtracking feature, as described herein. Various configurations of system 800 are envisioned, and various steps and/or functions of the processes described below may be shared among the various devices of system 800 or may be assigned to specific devices.

FIG. 8B is a simplified block diagram of an exemplary distributed computing system implemented by a plurality of the computing devices in FIG. 8A, in accordance with one or more embodiments. System 850 may comprise two or more computing devices 801a-n. In some examples, each of 801an may comprise one or more of processors 804a-n, respectively, and one or more of memory 802an, respectively. Processors 804a-n may function similarly to processor 804 in FIG. 8A, as described above. Memory 802a-n may function similarly to memory 802 in FIG. 8A, as described above.

While specific examples have been provided above, it is understood that the present invention can be applied with a wide variety of inputs, thresholds, ranges, and other factors, depending on the application. For example, the time frames, rates, ratios, and ranges provided above are illustrative, but one of ordinary skill in the art would understand that these time frames and ranges may be varied or even be dynamic and variable, depending on the implementation.

As those skilled in the art will understand, a number of variations may be made in the disclosed embodiments, all without departing from the scope of the invention, which is defined solely by the appended claims. It should be noted that although the features and elements are described in particular combinations, each feature or element can be used alone without other features and elements or in various combinations with or without other features and elements. The methods or flow charts provided may be implemented in a computer program, software, or firmware tangibly embodied in a computer-readable storage medium for execution by a general-purpose computer or processor.

Examples of computer-readable storage mediums include a read only memory (ROM), random-access memory (RAM), a register, cache memory, semiconductor memory devices, magnetic media such as internal hard disks and removable disks, magneto-optical media, and optical media such as CD-ROM disks.

Suitable processors include, by way of example, a general-purpose processor, a special purpose processor, a conventional processor, a graphical processing unit (GPU), a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, or any combination of thereof.

## Claims

1. A wearable personal inside-out location tracking system comprising:

   an augmented reality optic system comprising a hands-free wearable display positioned to be within a field of view of a user;

a plurality of sensors comprising at least a camera and an inertial sensor;

an input component comprising one or both of a button and a microphone; and

a personal computing system configured to implement an inside-out personal location tracking feature to generate a backtracking route based on a cone of visibility determined by application of a parametric model to a personal navigation history generated by the inside-out personal location tracking feature,

wherein the hands-free wearable display is configured to present a visualization associated with the backtracking route.

2. The system of claim 1, wherein the personal computing system is further configured to initialize the user's personal navigation history.

3. The system of claim 1, wherein the personal navigation history comprises a first-in-first-out (FIFO) queue.

4. The system of claim 3, wherein the personal computing system is further configured to insert into the FIFO queue a pair comprising 3D coordinates and an axis-angle vector for each waypoint generated by the tracking system, thereby building a sequence of waypoints into the FIFO queue.

5. The system of claim 1, wherein the user's personal navigation history comprises a sequence of waypoints, wherein each waypoint is at least a minimum allowable time apart and a minimum distance apart.

6. The system of claim 1, wherein the parametric model comprises a set of egocentric visibility constraints, the set of egocentric visibility constraints comprising an angular threshold, a minimum distance parameter, and a maximum distance parameter, the minimum distance parameter comprising a threshold minimum distance from a current camera center and the maximum distance parameter comprising a threshold maximum distance from the current camera center.

7. The system of claim 1, wherein the parametric model further comprises a set of environment constraints.

8. The system of claim 1, wherein the personal computing system is further configured to prune the personal navigation history to generate the cone of visibility.

9. The system of claim 1, wherein the backtracking route is configured to guide the user to a waypoint within the cone of visibility.

10. The system of claim 1, wherein the personal computing system is further configured to track the user's proximity to an initial waypoint.

11. The system of claim 1, wherein the personal computing system is further configured to track the user's orientation relative to an initial reference orientation.

12. A method for personal inside-out location tracking, the method comprising:

initializing a personal navigation history comprising a first-in-first-out (FIFO) queue;

inserting into the FIFO queue a plurality of waypoints in an order in which the plurality of waypoints are generated by a personal tracking system, thereby building a sequence of waypoints into the FIFO queue, the sequence of waypoints representing a user's personal navigation history, wherein each waypoint in the FIFO queue is at least a minimum allowable time apart and a minimum distance apart;

generating a cone of visibility by pruning the user's personal navigation history according to a parametric model representing both an egocentric visibility constraint and an environment constraint; and

determining a backtracking route based on the cone of visibility.

13. The method of claim 12, wherein the environment constraint comprises a map point.

14. The method of claim 13, wherein the map point represents an occlusion.

15. The method of claim 12, wherein the egocentric visibility constraint comprises an angular threshold, a minimum distance parameter, and a maximum distance parameter, the minimum distance parameter comprising a threshold minimum distance from a current camera center and the maximum distance parameter comprising a threshold maximum distance from the current camera center.

16. The method of claim 12, wherein each waypoint comprises a set of 3D coordinates and an axis-angle vector.

17. The method of claim 12, wherein pruning the user's personal navigation history comprises inspecting the sequence of waypoints in reverse chronological order.

18. The method of claim 12, further comprising tracking the user's proximity to an initial waypoint.

19. The method of claim 12, further comprising generating visualization data configured to cause a visualization associated with the backtracking route to be presented on a display.

20. The method of claim 19, wherein the visualization comprises a compass.

21. The method of claim 19, wherein the visualization comprises an icon.

22. The method of claim 19, wherein the visualization comprises a banner.

FIGURE 1A

FIGURE 1B

FIGURE 2A

FIGURE 2B

FIGURE 3

FIGURE 4A

FIGURE 4B

FIGURE 5

FIGURE 6A

600b

602b

Short press

608b

606b

FIGURE 6B

600c

602c

Other presses

608c

606c

604c

602c

FIGURE 6C

FIGURE 6D

700

**Start**

Initialize a personal navigation history comprising a first-in-first-out (FIFO) queue — 702

Insert into the FIFO queue a plurality of waypoints in an order in which they are generated by a personal tracking system, thereby building a sequence of waypoints into the FIFO queue, the sequence of waypoints representing the user's personal navigation history, wherein each waypoint in the FIFO queue is at least a minimum allowable time apart and a minimum distance apart — 704

Generate a cone of visibility by pruning the user's personal navigation history according to a parametric model, the parametric model representing both an egocentric visibility constraint and an environment constraint — 706

Determine a backtracking route based on the cone of visibility — 708

Generate visualization data configured to cause a visualization associated with the backtracking route to be presented on a display — 710

**End**

FIGURE 7A

750

Start

Initialize a personal navigation history comprising a first-in-first-out (FIFO) queue — 752

Insert into the FIFO queue a 3D coordinate and axis-angle vector in an order in which it is generated by a tracking system, each pair of 3D coordinate and axis-angle vector comprising a waypoint, thereby building a sequence of waypoints into the FIFO queue, the sequence of waypoints representing the user's personal navigation history, wherein each waypoint in the FIFO queue is at least a minimum allowable time apart and a minimum distance apart — 754

Generate a cone of visibility being constrained by a set of egocentric visibility constraints, the set of egocentric visibility constraints comprising an angular threshold, a minimum distance parameter, and a maximum distance parameter, the minimum distance parameter comprising a threshold minimum distance from a current camera center and the maximum distance parameter comprising a threshold maximum distance from the current camera center — 756

Determining a backtracking route based on the cone of visibility — 758

End

FIGURE 7B

800

Computing Device 801

| Processor 804 |

| Network Interface 808 |

| Output Module 812 |

| Display 806 |

| Input Device 810 |

Memory 802

| Database 814 |

Application 816

User Interface 818

820

## FIGURE 8A

850

Computing Device 801a

| Processor 804a |

| Memory 802a |

Computing Device 801b

| Processor 804b |

| Memory 802b |

Computing Device 801n

| Processor 804n |

| Memory 802n |

. . .

## FIGURE 8B

# EP 4 764 414 A1

## EUROPEAN SEARCH REPORT

**Application Number**

EP 25 22 5136

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/175861 A1 (GÜNTHER MARTIN [DE] ET AL) 8 June 2023 (2023-06-08)<br>* paragraph [0065] - paragraph [0067]; figure 2 *<br>* paragraph [0104] - paragraph [0105] *<br>* paragraph [0115] *<br>----- | 1-22 | INV.<br>G01C21/20 |
| Y | Bhattarai Manish: "Integrating Deep Learning and Augmented Reality to Enhance Situational Awareness in Firefighting Environments",<br>,<br>23 December 2020 (2020-12-23), pages 1-189, XP093396636,<br>Albuquerque, New Mexico<br>Retrieved from the Internet:<br>URL:https://www.proquest.com/docview/2778538661/fulltextPDF/E6E4A41170AF463APQ/1?accountid=29404<br>[retrieved on 2026-05-11]<br>* page 98 - page 116 *<br>----- | 1-22 | |

**TECHNICAL FIELDS SEARCHED (IPC)**

G01C

The present search report has been drawn up for all claims

| Place of search | Date of completion of the search | Examiner |
|---|---|---|
| The Hague | 15 May 2026 | Asthalter, Tanja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 5136

This annex lists the patent family members relating to the patent documents cited in  the above-mentioned European search report.
The members are as contained in the European Patent Office EDP file on
The European Patent Office is in no way liable for these particulars which are merely given for the purpose of information.

15-05-2026

| Patent document cited in search report | Publication date | Patent family member(s) | Publication date |
|---|---|---|---|
| US 2023175861 A1 | 08-06-2023 | DE 102022131567 A1 | 15-06-2023 |
| | | GB 2613703 A | 14-06-2023 |
| | | US 2023175861 A1 | 08-06-2023 |

EPO FORM P0459

For more details about this annex : see Official Journal of the European Patent Office, No. 12/82